# EUROPEAN PATENT APPLICATION

(11) **EP 2 441 938 A1**
(43) Date of publication of application: **18.04.2012**
(21) Application number: 11184564.0
(22) Date of filing: 10.10.2011
(51) Int. Cl.: F02C 9/00, F02C 9/26, F02C 9/28, F02C 9/48, G05B 19/42

(54) **Distributed small engine FADEC**

(30) Priority: 14.10.2010 US 904734
(71) Applicant: Hamilton Sundstrand Corporation, Windsor Locks, CT 06096-1010 (US)
(72) Inventor: Roy, Kevin P., West Springfield, MA Massachusetts 01089 (US); Zebrowski, Thaddeus J., Windsor, CT Connecticut 06095 (US)
(74) Representative: Tomlinson, Kerry John

(57) **Abstract**

A full authority digital engine controller (FADEC) (16;116;316;416) controls an engine (12;112;312;412) attached to an airframe (14;114;314;414). The FADEC (16;116;316;416) includes an electronic engine controller (EEC) (20;120;320;420) attached to the engine (12;112;312;412), an airframe data concentrator (ADC) (18;118;318,418) attached to the airframe (14;114;314;414), and a digital data bus (22;122;312;412) electrically connecting the ADC (18;118;318,418) to the EEC (20;120;320;420). The ADC (18;118;318,418) is electrically connected to a plurality of airframe sensors (26;126;326;426) to convert the airframe sensor signals to airframe sensor digital data. The digital bus (22;122;322;422) conducts the airframe sensor digital data to the EEC (20;120;320;420).

## Description

### BACKGROUND

The present invention relates to aircraft engine control systems. In particular, the invention relates to control systems for small aircraft engines.

Aircraft engines require highly reliable systems for control to ensure safe and efficient operation. Reliable control for more sophisticated gas turbine engines, and even some piston engines, is maintained, for example, by a Full Authority Digital Engine Control (FADEC). A FADEC receives cockpit commands in the form of a signal indicative of a performance level required from an engine. The FADEC also receives signals from a variety of sensors and other systems around the engine and the aircraft. The FADEC applies a set of control rules to the received signals and determines control signals to send to effectors on and around the engine. The control signals sent by the FADEC direct the effectors in such a way as to produce the required engine performance level. The FADEC performs this control function many times per second.

The primary mechanism by which the FADEC controls the engine is by controlling the amount of fuel flowing to a combustion area of the engine. In a gas turbine engine, for example, a Fuel Metering Unit (FMU) receives control signals from the FADEC that direct electro-mechanical effectors within the FMU to produce a required fuel flow rate. The FMU may also contain effectors that adjust stator vanes to alter the flow of air through the engine or bleed valves to control a compressor bleed air flow rate. The FMU often contains sensors, for example, an electro-mechanical position sensor, such as a Rotary Variable Differential Transformer (RVDT), monitoring the position of the effectors to provide signals to the FADEC as part of a feedback loop for more precise and responsive adjustment of the effectors. Signals to and from the FMU are typically analog and require heavy, shielded cables with large, heavy, shielded feed through connectors attached to the housing of the FMU to ensure the integrity of the analog signals. Like the FMU, the FADEC requires large, heavy, shielded feed through connectors attached to the housing of the FADEC to ensure the integrity of the analog signals. The FADEC is typically located somewhere on the engine to be close to the FMU to minimize the cable lengths between the FADEC and the FMU. However, the FADEC contains sophisticated electronics that generally cannot perform reliably if exposed to operating temperatures in and around the engine core. A cooling device attached to the FADEC, such as a cooling plate cooled by fuel flowing to the engine, can provide cooling for the FADEC. This leads to a tradeoff between the proximity of the FADEC to the FMU, which is near the extremely hot engine core, and the cooling capacity and weight of the cooling device needed to protect the FADEC. As a result, the FADEC is typically mounted on or near the engine, but not close to the FMU and the engine core. The challenge presented by this tradeoff is particularly acute in small engines where the impact of extra cable weight is much greater as a fraction of the total engine weight than for a large engine.

Positioning the FADEC somewhere on or near the engine to minimize the cable lengths between the FADEC and the FMU forces a corresponding increase in cable lengths between the FADEC and the many sensors and systems on the airframe that provide signals to the FADEC. While such an increase in cable length, and the corresponding increase in cable weight, is a significant burden for a large engine on a large airframe, the increased weight represents an even greater relative burden for a small engine on a small airframe.

It is desirable to design a FADEC to control a large variety of engines. In use, an individual FADEC must be configured for the combination airframe and actual engine it will control. In addition, the FADEC performs complex calculations based, in part, on sensor input from the airframe. Each airframe type to which an engine may be attached will likely have different sensors, both in quantity and type, and will certainly have unique flight characteristics that require adjustment in the engine control calculations performed by the FADEC. The FADEC must be configured, or programmed, with control schedules for its specific engine/airframe combination. Storage memory for the control schedules for all foreseeable engine/airframe combinations for which the FADEC could be used can be allocated in the FADEC if the FADEC has sufficient data storage. A large engine can accommodate a large FADEC with room for such a large amount of data storage. Because the control schedules are stored and available in the FADEC, a single certification test can be performed for the FADEC software that covers all known engine/airframe combinations. Configuring a FADEC for such a large engine involves inserting a data entry plug into the FADEC that corresponds to the specific engine/airframe combination. The plug is typically large and sturdily constructed to handle the stresses associated with being mounted on the engine, thus requiring a large and sturdily constructed external socket on the FADEC as well. The data entry plug acts as a set of jumpers, directing the FADEC to the correct software for the desired airframe/engine combination.

In contrast, small engines cannot tolerate the extra weight of a FADEC large enough to store such a large amount of data, nor the size and weight of the data entry plug and the data entry plug socket. Configuration of small engines is done by loading a single software version into the FADEC for the specific engine/airframe combination. Each version of the software for the many unique engine/airframe combinations must be independently certified at considerable time and cost. This severely limits the number of small engine/airframe combinations to which a FADEC may be attached.

### SUMMARY

One embodiment of the present invention is a full authority digital engine controller (FADEC) for controlling an engine attached to an airframe. The FADEC includes an electronic engine controller (EEC) attached to the engine, an airframe data concentrator (ADC) attached to the airframe, and a digital data bus electrically connecting the ADC to the EEC. The ADC is electrically connected to a plurality of airframe sensors to convert the airframe sensor signals to airframe sensor digital data. The digital bus conducts the airframe sensor digital data to the EEC.

### BRIEF DESCRIPTION OF THE DRAWINGS

FIG. 1 is a diagram illustrating an embodiment of the present invention for reducing weight penalties for a small aircraft engine FADEC by reducing the number, length and bulk of cables and cable connectors linking various components to the FADEC.

FIG. 2 is a diagram illustrating another embodiment of the present invention for reducing weight penalties for a small aircraft engine FADEC by reducing the number, length and bulk of cables and cable connectors linking various components to the FADEC.

FIG. 3 is a diagram illustrating another embodiment of the present invention for reducing weight penalties for a small aircraft engine FADEC by reducing the number, length and bulk of cables and cable connectors linking various components to the FADEC.

FIG. 4 is a diagram illustrating another embodiment of the present invention for reducing weight penalties for a small aircraft engine FADEC by reducing the number, length and bulk of cables and cable connectors linking various components to the FADEC and for providing additional functions.

FIG. 5 is a diagram illustrating another embodiment of the present invention for reducing weight penalties for a small aircraft engine FADEC by reducing the number, length and bulk of cables and cable connectors linking various components to the FADEC and for providing additional functions.

### DETAILED DESCRIPTION

Full Authority Digital Engine Control (FADEC) systems for small aircraft engines are limited in their functionality by the need to minimize weight penalties associated with such control systems. The present invention significantly reduces such weight penalties by reducing the number, length and bulk of cables and cable connectors linking various components to the FADEC. In addition, by distributing the FADEC functions between the engine and the airframe, some of the weight and complexity of the typical engine-mounted FADEC is shifted from the engine to the airframe, which is better able to handle the weight and is a more benign environment, better suited to complex components. Finally, the reduced weight penalty and more suitable environment for a portion of the FADEC provide an opportunity to expand FADEC functionality to include features normally found only on large aircraft engines, such as configuration by data entry plug.

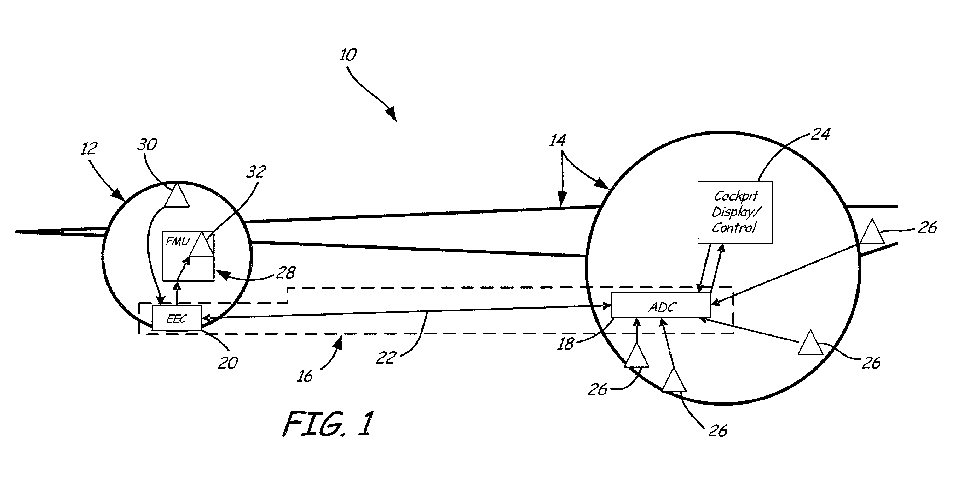

FIG. 1 is a diagram illustrating an embodiment of the present invention for reducing weight penalties for a small aircraft engine FADEC by reducing the number, length and bulk of cables and cable connectors linking various components to the FADEC. FIG. 1 illustrates a small aircraft engine FADEC distributed between an engine and an airframe and connected by a digital bus, the digital bus replacing heavy cable harnesses required to carry signals from a variety of sensors and other systems around the airframe. FIG. 1 shows aircraft 10 comprised of engine 12, airframe 14 and FADEC 16. FADEC 16 is comprised of airframe data concentrator (ADC) 18, electronic engine controller (EEC) 20, and digital bus 22. Airframe 14 includes cockpit display/control 24 and a plurality of airframe sensors 26. Engine 12 includes fuel metering unit (FMU) 28 and engine sensor 30. FMU 28 includes effector 32. ADC 18 is an electronic communication device that receives analog signals from multiple sources and converts the signals to digital data for transmission over a digital data bus. In addition, ADC 18 receives digital data from digital sources for transmission over a digital data bus. EEC 20 is an electronic control device that receives analog sensor signal inputs and digital data inputs and applies a set of control rules to the inputs to generate a control signal. Digital bus 22 is a data bus capable of carrying digital data, for example, Ethernet, CAN, SPI, EIA/RS-485, MIL-STD-1553, IEEE 1394, and ARINC 429. Airframe sensors 26 are any of a variety of sensors including, for example, static pressure sensors and position sensors, such as linear variable differential transformer (LVDT) and rotary variable differential transformer (RVDT) sensors. FMU 28 is an electro-mechanical device for metering a controlled rate of fuel and typically contains pumps, sensors and effectors, such as effector 32. Effector 32 is any of a variety of electro-mechanical devices, for example, a solenoid, a stepper motor, a torque motor or an electric motor. Engine sensor 30 is any of a variety of sensors in and around engine 12 employed to monitor the engine and its components. Such sensors include, for example, pressure sensors, temperature sensors, position sensors, and rotational speed sensors.

As illustrated in FIG. 1, engine 12 is attached to airframe 14 of aircraft 10. FADEC 16 is distributed between engine 12 and airframe 14, with ADC 18 attached to airframe 14, EEC 20 attached to engine 12, and digital bus 22 electrically connecting ADC 18 to EEC 20. Cockpit display/control 24 and airframe sensors 26 are electrically connected to ADC 18. Sensor 30 is electrically connected to EEC 20. FMU 28 is electrically connected to EEC 20, directing signals from EEC 20 to effector 32.

In operation, airframe sensors 26 generate analog sensor signals which are transmitted to ADC 18. ADC 18 converts the analog sensor signals from airframe sensors 26 to airframe sensor digital data for transmission over digital bus 22. Cockpit display/control 24 also generates airframe sensor signals including, for example, throttle setting and airspeed set point. The electrical connection between cockpit display/control 24 and ADC 18 is either analog or digital. If analog, ADC 18 converts the analog signals from cockpit display/control 24 to airframe sensor digital data for transmission over digital bus 22. ADC 18 transmits the airframe sensor digital data over digital bus 22 to EEC 20. EEC 20 receives an analog sensor signal from engine sensor 30. EEC 20 generates a control signal by applying a set of control rules to the analog sensor signal received from engine sensor 30 and the airframe sensor digital data received over digital bus 22. EEC 20 transmits the control signal to effector 32 in FMU 28 to, for example, modulate the flow of fuel to engine 12, adjust stator vanes to alter the flow of air through the engine, or modulate the flow of compressor bleed air, thereby controlling engine 12.

Optionally, the analog sensor signal from engine sensor 30 is converted by EEC 20 to engine sensor digital data for transmission over digital bus 22. EEC 20 transmits the engine sensor digital data over digital bus 22 to ADC 18. Also, optionally, EEC 20 transmits other digital data, for example, an engine maintenance message or a calculated engine setting, over digital bus 22 to ADC 18. If the electrical connection between ADC 18 and cockpit display/control 24 is digital, ADC 18 transmits the digital data directly to cockpit display/control 24 for display. If the electrical connection between ADC 18 and cockpit display/control 24 is analog, ADC 18 converts the digital data to an analog signal before transmitting the converted analog signal to cockpit display/control 24 for display.

The distributed FADEC of the present invention provides several advantages. The use of digital bus 22 to transmit information between airframe 14 and engine 12 replaces numerous cables and cable connectors required to transmit analog airframe sensor information with a single digital data bus resulting in a reduction in weight associated with an engine control system. This weight reduction is particularly significant for small aircraft engines. In addition, by transferring some of the functionality of FADEC 16 off engine 12 to airframe 14, for example, analog-to-digital conversion of the airframe sensor signals, electronics associated with the conversion are in a more benign environment. The environment of engine 12 is typically fraught with high vibration and high temperatures, compared with the environment of airframe 14. Because the electronics need not be designed for high vibration and high temperature, the electronics are optionally less expensive, more readily available and contain additional functionality, for example, extra memory and smaller form factor.

Another advantage of the distributed FADEC of the present invention is retaining critical engine control on the engine itself. Any link between airframe 14 and engine 12, such as digital bus 22, is subject to disruption of data transmission. While the airframe sensor digital data is an important input to EEC 20 for proper control of engine 12, EEC 20 can still operate engine 12 without the airframe sensor digital data. EEC 20 can generate the control signal by applying the set of control rules to the analog sensor signal received from engine sensor 30, employing default values for airframe sensor digital data during disruption of digital bus 22. EEC 20 continues to transmit the control signal to effector 32 in FMU 28, thereby controlling engine 12. Because only non-critical functionality is moved off engine 12 to ADC 18, a higher level of safety is achieved by ensuring continued engine control and operation during a disruption of the link between engine 12 and airframe 14.

Although the embodiment of FIG. 1 is shown and described with engine sensor 30 external to FMU 28, it is understood that engine sensor 30 represents sensors in and around engine 12, including, for example, sensors within FMU 28, such as a position sensor for sensing the position of effector 32. This understanding applies to all subsequent embodiments as well.

For ease of illustration, the embodiment of FIG. 1 is shown and described with single digital bus 22. It is understood that the present invention comprises additional digital buses as desired, for example, to accommodate desired data transfer rates higher than available with a single digital bus or to provide redundant data paths, but in all cases, the significant weight reduction associated with replacing numerous cables and cable connectors required to transmit analog airframe sensor information with digital buses remains. This understanding applies to all subsequent embodiments comprising a digital bus.

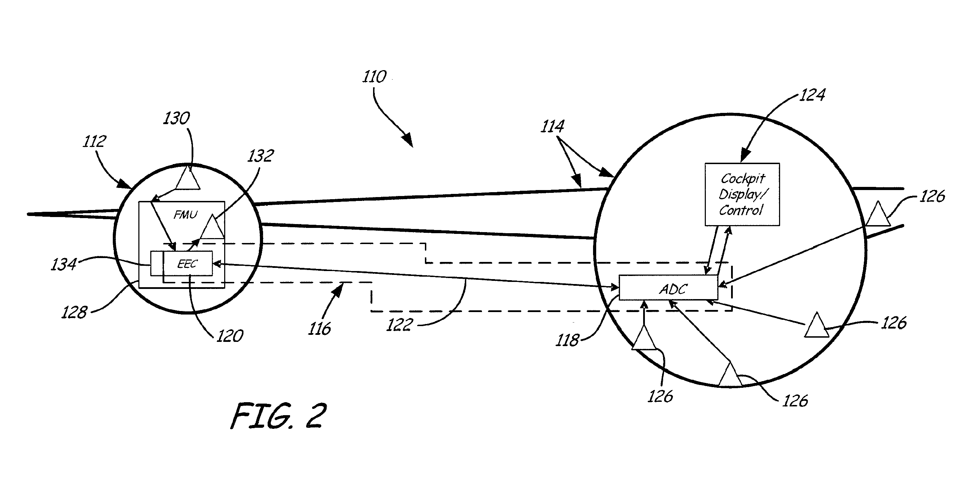

FIG. 2 is a diagram illustrating another embodiment of the present invention for reducing weight penalties for a small aircraft engine FADEC by reducing the number, length and bulk of cables and cable connectors linking various components to the FADEC. The embodiment of FIG. 2 illustrates a small aircraft engine FADEC distributed between an engine and an airframe and connected by a digital bus, the digital bus replacing heavy cable harnesses required to support the multiple signals from a variety of sensors and other systems around the airframe. The components and operation of the embodiment of FIG. 2 are identical to those described with reference to FIG. 1, with reference numbers differing by 100, except as described below. FIG. 2 illustrates an additional innovation of incorporating a portion of distributed FADEC 116 in FMU 128 to further reduce weight penalties for a small aircraft engine FADEC. FMU 128 includes effector 132, EEC 120 and cooling device 134. Cooling for cooling device 134 is produced by any of a number of known techniques, for example, fuel flowing through cooling device 134, such as with a cooling plate, or including a thermoelectric element within cooling device 134. Cooling device 134 is thermally connected to EEC 120 to cool temperature-sensitive electronic components within EEC 120 that would otherwise be unable to operate in the high temperature conditions within FMU 128. EEC 120 is significantly smaller than a prior art FADEC with functionality comparable to FADEC 116 because some functionality of FADEC 116 resides in ADC 118 on airframe 114. The small size of EEC 120 requires less cooling, resulting in cooling device 134 being much smaller and lighter than, for example, a cooling plate adequate to cool a prior art FADEC if subjected to similar conditions. Together, the combination of EEC 120 and cooling device 134 is small enough to fit within FMU 128.

The embodiment of the present invention illustrated in FIG. 2 retains all of the advantages described above in reference to the embodiment shown in FIG. 1. In addition, by incorporating EEC 120 within FMU 128 the embodiment of FIG. 2 reduces the amount of heavy, shielded cable required to connect EEC 120 to components within FMU 128, such as effector 132. Also, this embodiment of the present invention eliminates the need for a separate heavy protective housing normally surrounding a prior art FADEC and, along with it, the large, heavy, shielded feed-through connectors attached to the housing of such a prior art FADEC.

Beyond the significant weight reduction, the embodiment of FIG. 2 provides the additional benefit of creating in FMU 128, a single, testable unit incorporating EEC 120 and effector 132. The ability to test and calibrate FMU 128 as a unit permits the use of lower cost, lower precision parts and allows for better tuning of the integrated unit, leading to better performance characteristics for control of fuel flow.

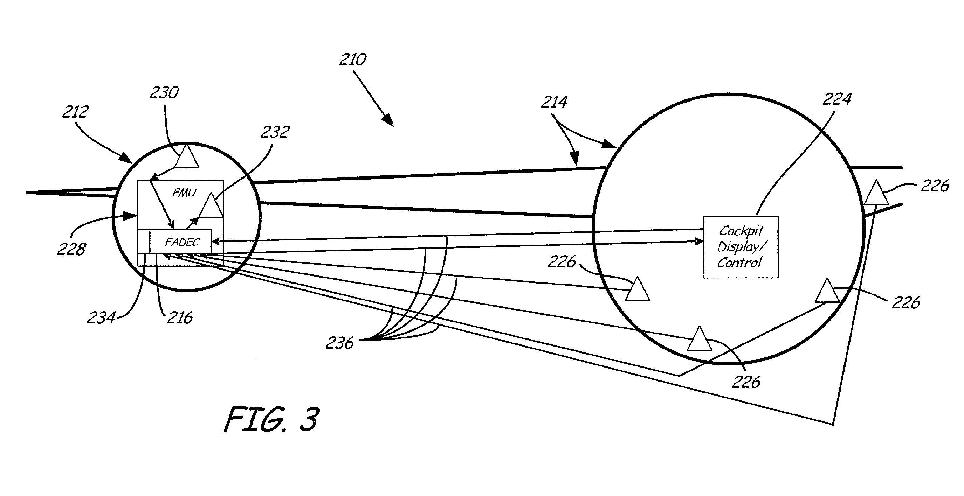

The embodiment of FIG. 2 illustrates the additional innovation of incorporating a portion of distributed FADEC 116 in FMU 128 to further reduce weight penalties for a small aircraft engine FADEC. FIG. 2 shows this in combination with the distributed FADEC innovation detailed in reference to FIG. 1. However, the innovation of an FMU mounted EEC to further reduce cable and cable connector weight can be implemented separately. FIG. 3 is a diagram illustrating another embodiment of the present invention for reducing weight penalties for a small aircraft engine FADEC by reducing the number, length and bulk of cables and cable connectors linking various components to the FADEC. The components of the embodiment of FIG. 3 are identical to those described with reference to FIG. 2, with reference numbers differing by 100, except as described below. FIG. 3 illustrates implementation of an FMU mounted FADEC to reduce cable and cable connector weight. The embodiment of FIG. 3 includes a plurality of cables and cable harnesses 236. FMU 228 comprises FADEC 216. FADEC 216 receives airframe analog signals over the plurality of cables and cable harnesses 236. FADEC 216 is an undistributed FADEC including an EEC and all of analog to digital conversion electronics required for analog-to-digital conversion of the airframe sensor signals. Cooling device 234 is thermally connected to FADEC 216 to cool temperature-sensitive electronic components within FADEC 216 that would otherwise be unable to operate in the high temperature conditions within FMU 228. FADEC 216 is smaller than a prior art FADEC due to the use of smaller, more advanced integrated circuits and higher density packaging. In addition, through the use of high temperature integrated circuit technology, the temperature-sensitive electronic components within FADEC 216 are less temperature-sensitive than those in a prior art FADEC. This use of high temperature integrated circuit technology reduces the cooling load necessary to maintain FADEC 216 within an acceptable temperature range, reducing the size of cooling device 234. The combination of the reduced size of FADEC 216 and the reduced size of cooling device 234 enable them to fit within FMU 228.

Although the embodiment of FIG. 3 is not as advantageous as that of FIG. 2 for reducing weight penalties for a small aircraft engine FADEC by reducing the number, length and bulk of cables and cable connectors linking various components to the FADEC, the embodiment of FIG. 3 is particularly useful in retrofitting a separate prior art FADEC and prior art FMU with FMU 228 to obtain some of the above-mentioned advantages of the present invention without extensively refitting the entire aircraft, as would be required to achieve the embodiment of FIG. 2. By incorporating FADEC 216 within FMU 228 the embodiment of FIG. 3 reduces the amount of heavy, shielded cable required to connect FADEC 216 to components within FMU 228, such as effector 232. This embodiment of the present invention also eliminates the need for a separate heavy protective housing normally surrounding a prior art FADEC and, along with it, the large, heavy, shielded feed-through connectors attached to the housing of such a prior art FADEC. In addition, as with the embodiment of FIG. 2, the embodiment of FIG. 3 provides the additional benefit of creating in FMU 228, a single, testable unit incorporating FADEC 216 and effector 232. The ability to test and calibrate FMU 228 as a unit permits the use of lower cost, lower precision parts and allows for better tuning of the integrated unit, leading to better performance characteristics for control of fuel flow.

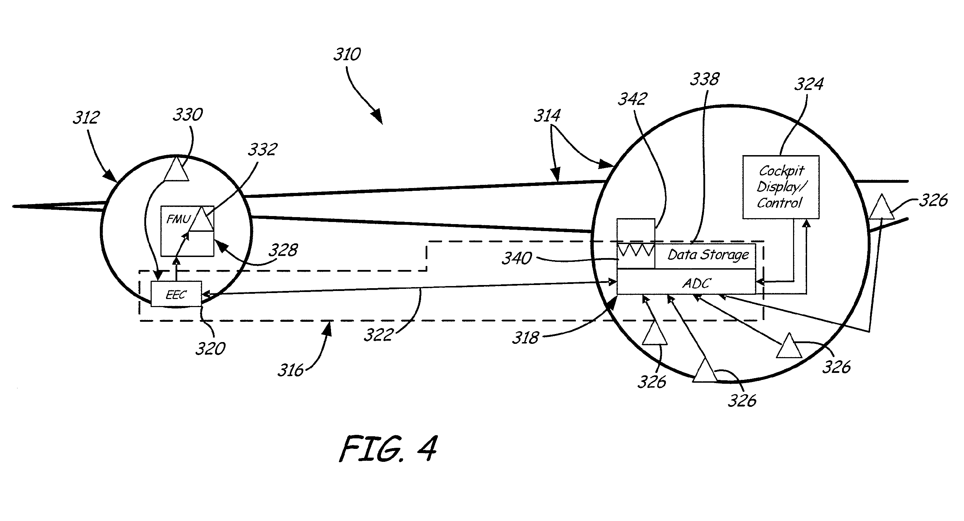

The embodiment described in reference to FIG. 4, like that in FIG. 1, illustrates a small aircraft engine FADEC distributed between an engine and an airframe and connected by a digital bus, the digital bus replacing heavy cable harnesses required to support the multiple cables carrying signals from a variety of sensors and other systems around the airframe. By distributing some of the functionality of the small engine FADEC to the airframe and employing an airframe data converter, not only is the distributed FADEC lighter, but additional functionality can be added on the airframe side where any weight penalty due to the added functionality has less impact than it would if added on the engine side. In addition, because any components added to the airframe side need not be designed for the high vibration and high temperature environment on the engine side, the components are optionally less expensive, more readily available, and lighter. The reduced weight penalty and more suitable environment for the portion of the distributed FADEC on the airframe side provide an opportunity to expand FADEC functionality to include features normally found only on large aircraft engines, such as configuration by data entry plug.

FIG. 4 is a diagram illustrating another embodiment of the present invention for reducing weight penalties for a small aircraft engine FADEC by reducing the number, length and bulk of cables and cable connectors linking various components to the FADEC and for providing FADEC configuration by data entry plug. The components and operation of FIG. 4 are identical to those describe in reference to FIG. 1, with reference numbers differing by 300, except as described below. FIG. 4 shows ADC 326 of FADEC 316 comprises data storage device 338, data entry plug socket 340 and data entry plug 342. Data storage device 338 is any type of data storage device, for example, a solid-state non-volatile memory device, a magnetic hard drive, or an optical storage drive. Data storage device 338 comprises control schedules with configuration data for a plurality of combinations and variations of engine 312 and airframe 314 for which FADEC 316 can be employed. The configuration data is in the form of at least one of a set of look-up tables, constants and software code. Data entry plug socket 340 is designed to mate electrically and physically with data entry plug 342. Data entry plug 342 comprises at least one of a set of jumper-like electrical connections, for example, discrete jumper connectors or a non-volatile memory device, which are unique to a specific combination of engine 312 and airframe 314.

FADEC 316 is configured by inserting data entry plug 342 into data entry plug socket 340. The electrical connections of data entry plug 342 direct ADC 326 to retrieve configuration data corresponding to the specific combination of engine 312 and airframe 314 from the control schedules stored within data storage device 338. ADC 326 retrieves the configuration data from data storage device 338 and transmits the configuration data over digital bus 322 to EEC 320. EEC 320 receives the transmitted configuration data and completes configuration of FADEC 316.

In addition to all of the advantages described above in reference to FIG. 1, the embodiment described in reference to FIG. 4 has several advantages. Data storage device 338 is large enough to hold control schedules for all foreseeable combinations and variations of engine 312 and airframe 314, so a single certification for FADEC 316 covers all known engine 312 and airframe 314 combinations for which FADEC 316 may be used. This is in contrast to the prior art for small aircraft engine FADECs, where each version of the software for the many unique engine/airframe combinations or variation must be independently certification tested. Also, because data entry plug 342 and data entry plug socket 340 are located in the benign environment of airframe 314, they need not be as large, heavy or sturdily constructed as comparable components are when mounted on a large engine.

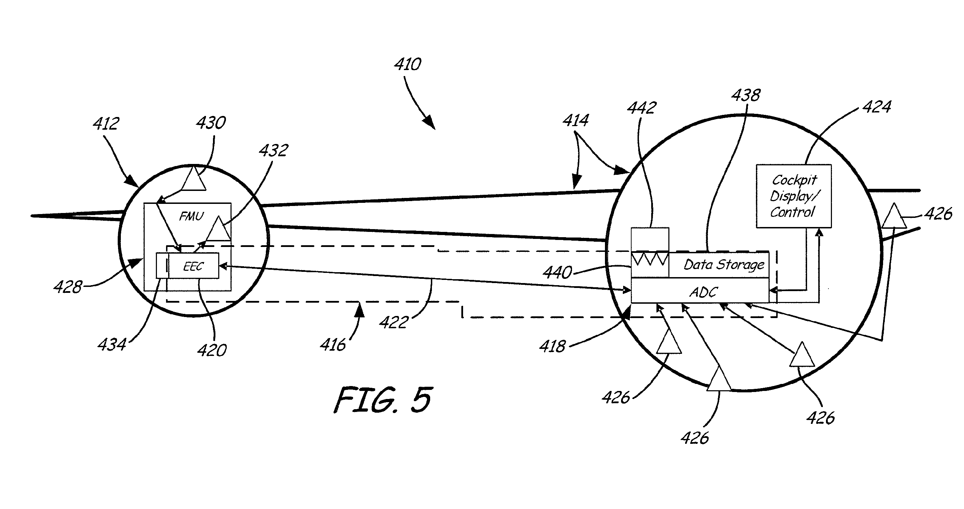

FIG. 5 is a diagram illustrating another embodiment of the present invention for reducing weight penalties for a small aircraft engine FADEC by reducing the number, length and bulk of cables and cable connectors linking various components to the FADEC and for providing FADEC configuration by data entry plug. FIG. 5 combines innovative aspects of the present invention as described in reference to FIGS. 2 and 4.

FIG. 5 shows aircraft 410 comprised of engine 412, airframe 414 and FADEC 416. FADEC 416 is comprised of ADC 418, EEC 420, and digital bus 422. Airframe 414 includes cockpit display/control 424 and a plurality of airframe sensors 426. Engine 412 includes fuel metering unit FMU 428 and engine sensor 430. FMU 428 includes effector 432, cooling device 434, and EEC 420 of FADEC 416. ADC 418 comprises data storage device 438, data entry plug socket 440, and data entry plug 442. All components and their connections are as described above in reference to similarly named components in FIGS. 2 and 4. Operation of the embodiment of FIG. 5 is also as described in reference to FIGS. 2 and 4.

The embodiment shown in FIG. 5 has all of the advantages of the present invention as described in reference to FIGS. 2 and 4. The distributed FADEC of the present invention provides several advantages. The use of digital bus 422 to transmit information between engine 412 and airframe 414 replaces numerous cables and cable connectors required to transmit analog airframe sensor information with a single digital data bus resulting in a reduction in weight associated with an engine control system. This weight reduction is particularly significant for small aircraft engines.

Further reduction in weight associated with the engine control system is achieved by incorporating EEC 420 within FMU 428, thereby reducing the amount of heavy, shielded cable required to connect EEC 420 to components within FMU 428, such as effector 432. Incorporating EEC 420 within FMU 428 also eliminates the need for a separate heavy protective housing normally surrounding a prior art FADEC and, along with it, the large, heavy, shielded feed-through connectors attached to the housing of such a prior art FADEC. Beyond the significant weight reduction, incorporating EEC 420 within FMU 428 provides the additional benefit of creating in FMU 428, a single, testable unit incorporating EEC 420 and effector 432. The ability to test and calibrate FMU 428 as a unit permits the use of lower cost, lower precision parts and allows for better tuning of the integrated unit, leading to better performance characteristics for control of fuel flow.

Another advantage of the distributed FADEC of the present invention is retaining critical engine control on the engine itself. Any link between airframe 414 and engine 412, such as digital bus 422, is subject to disruption of data transmission. While the airframe sensor digital data is an important input to EEC 420 for proper control of engine 412, EEC 420 can still operate engine 412 without the airframe sensor digital data. EEC 420 can generate the control signal by applying the set of control rules to the analog sensor signal received from engine sensor 430, employing default values for airframe sensor digital data during disruption of digital bus 422. EEC 420 continues to transmit the control signal to effector 432 in FMU 428, thereby controlling engine 412. Because only non-critical functionality is moved off engine 412 to ADC 418, a higher level of safety is achieved by ensuring continued engine control and operation during a disruption of the link between engine 412 and airframe 414.

Another advantage is obtained by transferring some of the functionality of FADEC 416 off engine 412 to airframe 414, for example, analog-to-digital conversion of the airframe sensor signals, electronics associated with the conversion are in a more benign environment. Because the electronics need not be designed for high vibration and high temperature, the electronics are optionally less expensive, more readily available and contain additional functionality, for example, extra memory and smaller form factor.

Finally, the reduced weight penalty and more suitable environment for the portion of the distributed FADEC on the airframe side provide an opportunity to expand FADEC functionality to include features normally found only on large aircraft engines, such as configuration by data entry plug. Because data storage device 438 is large enough to hold configuration tables for all foreseeable combinations and variations of engine 412 and airframe 414, a single certification for FADEC 416 covers all known engine 412 and airframe 414 combinations for which FADEC 416 may be used. This is in contrast to the prior art for small aircraft engine FADECs, where each version of the software for the many unique engine/airframe combinations or variation must be independently certified by the certifying authority. Also, because data entry plug 442 and data entry plug socket 440 are located in the benign environment of airframe 414, they need not be as large, heavy or sturdily constructed as comparable components are when mounted on a large engine.

While the invention has been described with reference to exemplary embodiments, it will be understood by those skilled in the art that various changes may be made and equivalents may be substituted for elements thereof without departing from the scope of the invention, which is defined by the claims. In addition, many modifications may be made to adapt a particular situation or material to the teachings of the invention without departing from the scope thereof. Therefore, it is intended that the invention not be limited to the particular embodiments disclosed, but that the invention will include all embodiments falling within the scope of the appended claims.

## Claims

1. A full authority digital engine controller (FADEC) (16;116;316;416) for controlling an engine (12;112;312;412) attached to an airframe (14;114;314;414), the FADEC comprising:
an electronic engine controller (EEC) (20;120;320;420) attached to the engine;
an airframe data concentrator (ADC) (18;118;318;418) attached to the airframe and electrically connected to a plurality of airframe sensors (26;126;326;426) to convert the airframe sensor signals to airframe sensor digital data; and
a digital bus (22;122;322;422) connecting the ADC to the EEC to conduct the airframe sensor digital data to the EEC.

2. The FADEC of claim 1, wherein the EEC is connected to an engine sensor (30;130;330;430) to receive an engine sensor signal.

3. The FADEC of claim 2, wherein the EEC produces a control signal, the control signal responsive to the engine sensor signal and the airframe sensor digital data.

4. The FADEC of claim 2 or 3, wherein the EEC converts the engine sensor signal to engine sensor digital data.

5. The FADEC of claim 4, wherein digital data bus conducts the engine sensor digital data to the ADC.

6. A system for controlling an aircraft engine (12; 112;312;412) attached to an airframe (14;114;314;414), the system comprising:
the FADEC of claim 1;
a fuel metering unit (FMU) (28;128;328;428) attached to the engine, the FMU comprising an effector (32;132;332;432); and
an engine sensor (30; 130;330;430);
wherein the engine sensor is electrically connected to the EEC to provide an engine sensor signal to the EEC; the effector is electrically connected to the EEC to receive a control signal sent from the EEC; and the control signal sent from the EEC is responsive to the airframe sensor digital data sent by the ADC over the digital bus and the engine sensor signal.

7. The system of claim 6, wherein the engine sensor comprises at least one of a pressure sensor, a temperature sensor, a position sensor, and a rotational speed sensor.

8. The system of claim 6 or 7, wherein the effector adjusts one of a rate of fuel flowing into the engine, a stator vane position, and a rate of bleed air flowing from an engine compressor, the adjustment in response to the control signal sent from the EEC.

9. The system of claim 6, 7 or 8 wherein the effector comprises at least one of a solenoid valve, a stepper motor, a torque motor, and an electric motor.

10. The system of any of claims 6 to 9, wherein the plurality of airframe sensors comprise at least one of a pressure sensor, a temperature sensor, a position sensor, and a rotational speed sensor.

11. The system of any of claims 6 to 10, further comprising a cockpit display (24;124;324;424) connected to the ADC for displaying engine sensor digital data, wherein the EEC converts the engine sensor signal to the engine sensor digital data and sends the engine sensor digital data to the ADC over the digital bus.

12. The system of claim 11, wherein the cockpit display connected to the ADC further displays at least one of an engine maintenance message and a calculated engine setting, wherein the EEC sends the engine maintenance message and calculated engine setting to the ADC over the digital bus.

13. A method of controlling an aircraft engine (12;112;312;412) attached to an airframe (14;114;314;414), the method comprising:
receiving airframe sensor signals from airframe sensors (26;126;326;426) at an airframe data concentrator (ADC) (18;118;318;418) attached to the airframe;
converting the received airframe sensor signals into airframe sensor digital data within the ADC;
transmitting the airframe sensor digital data from the ADC over a digital bus (22;122;322;422) to an electronic engine control (EEC) attached to the engine;
receiving an engine sensor signal from an engine sensor at the EEC;
generating a control signal within the EEC, wherein the generated control signal is responsive to the received airframe sensor digital data and the received engine sensor signal;
transmitting the generated control signal to an effector metering a rate of fuel flowing to the engine; and
adjusting the effector in response to the transmitted control signal to control the rate of fuel flowing to the engine.

14. The method of claim 13, further comprising:
converting the received engine sensor signal into engine sensor digital data within the EEC;
transmitting the engine sensor digital data from the EEC over the digital bus to the ADC; and
transmitting the engine sensor digital data from the ADC to a cockpit display (24;124;324;424).
